# FASCICULE DE BREVET EUROPEEN

(11) **EP 1 250 538 B1**
(45) Date de publication et mention de la délivrance du brevet: **16.03.2005**
(21) Numéro de dépôt: 01909670.0
(22) Date de dépôt: 22.01.2001
(51) Int. Cl.: F16F 1/38

(54) **SECURISATION D'ARTICULATION ELASTIQUE**
SICHERUNG EINES ELASTISCHEN GELENKES
ELASTIC ARTICULATION SAFETY

(30) Priorité: 26.01.2000 FR 0001013
(43) Date de publication de la demande: 23.10.2002
(73) Titulaire: Michelin AVS S.A.S., 78035 Versailles (FR)
(72) Inventeur: GAUTHERON, Michel, F-58000 Nevers (FR); COURTOIS, Philippe, First Hills iidabashi apt 1305, Tokyo 112-0004 (JP)
(74) Mandataire: Weber-Bruls, Dorothée, Dr.
(86) Numéro de dépôt international: PCT/EP2001/000650
(87) Numéro de publication internationale: WO 2001/055614

(56) Documents cités:
- EP-A- 0 926 380
- WO-A-97/47897
- WO-A-98/12453
- DE-C- 4 411 518
- GB-A- 563 871
- US-A- 5 301 414

## Description

La présente invention concerne les articulations élastomériques utilisées en particulier sur les véhicules automobiles et les procédés d'obtention de ces articulations. Le rôle de ces articulations est généralement double. D'une part, elles permettent des degrés de liberté aux éléments rigides qu'elles relient. D'autre part, elles filtrent une part importante des vibrations ou des chocs transmis par la route ou le moteur du véhicule. D'une façon schématique, une telle articulation est constituée de parties rigides reliées entre elles par au moins un élément souple. En fonctionnement normal, les mouvements relatifs de parties rigides sont autorisés par la déformation élastique du ou des élément souples. En cas de rupture de l'élément déformable à la suite d'une sollicitation extrême, d'un défaut ou de l'usure normale de la pièce, il est parfois indispensable, par exemple pour des raisons de sécurité passive, que les éléments rigides soient maintenus solidaires.

D'autre part, sous de fortes sollicitations, la force de fixation de l'articulation à l'élément rigide peut devenir insuffisante, ce qui peut conduire également à la rupture de la liaison. Le fait d'empêcher la séparation des éléments rigides articulés en cas de sollicitations extrêmes est désigné sous le terme de 'sécurisation' d'articulation par les spécialistes de ces produits.

Par ailleurs, on peut vouloir contrôler l'amplitude maximale des déformations pour différentes raisons, comme la protection de l'articulation elle-même ou d'autres organes qui pourraient être endommagés en cas de contact.

Ainsi, dans le cas d'articulations constituées d'armatures sensiblement cylindriques et concentriques rendues solidaires par l'interposition d'un élément élastomérique adhérisé, la rupture de cet élément peut permettre la séparation complète des pièces rigides respectivement liées aux armatures .Ces articulations sont généralement fixées par emmanchement serré dans la pièce extérieure et liées à l'autre pièce par une vis ou un boulon traversant l'armature intérieure. Si l'articulation est soumise à une force importante (choc par exemple), le risque existe qu'elle sorte de cet emmanchement, interrompant la liaison.

Pour éviter une telle séparation sans pour autant modifier la géométrie de l'environnement de l'articulation, on introduit lors du montage un élément supplémentaire maintenu par les moyens de fixation. Cet élément prend la forme d'une épaisse rondelle métallique plate ou profilée. La taille de cette rondelle est tel qu'en cas de rupture de l'élément déformable, la rondelle empêche la séparation des armatures. De même, en cas de glissement de l'articulation par rapport à l'élément rigide associé, une rondelle de taille suffisante (supérieure à celle de l'emmanchement) empêche la séparation complète des éléments. L'énergie dissipée lors de ces déformations (en cas de choc exceptionnel) est un critère de performance important de ces liaisons.

Un autre fonction possible (en fonction de la géométrie retenue) de cette rondelle est de limiter la déformation de l'élastomère en cas de sollicitations extrêmes afin de protéger l'articulation.

Cependant, l'emploi d'une telle rondelle présente l'inconvénient d'introduire une pièce supplémentaire et de compliquer le montage, surtout s'il est automatisé. Ceci a des répercussions inévitables en termes de coûts.

L'invention propose de remplacer cet élément supplémentaire par un profil spécifique de l'extrémité de l'armature intérieure qui intègre les fonctions de la rondelle de l'art antérieur tout en supprimant les manipulations associées.

L'invention consiste en une articulation élastique comprenant une armature rigide cylindrique se situant radialement à l'intérieure de l'articulation et présentant au niveau d'une première extrémité un premier diamètre extérieur maximal et une armature rigide cylindrique radialement extérieure présentant un premier diamètre intérieur minimal d'une extrémité adjacente à ladite première extrémité, les dites armatures rigides sensiblement cylindriques et concentriques étant solidaires sans glissement par matériau élastomérique, ladite première extrémité dépassant axialement de ladite armature extérieure, ledit premier diamètre extérieur de ladite armature rigide intérieure étant supérieur audit premier diamètre intérieur minimal de ladite armature rigide extérieure, voir WO-A-97/47897 ou DE-C-4 411 518.

L'invention est définie par la revendication 1.

Selon l'invention l'augmentation de diamètre de la première extrémité de l'armature rigide intérieure peut être réalisée après le montage de l'articulation sur l'un des éléments rigides qu'elle relie.

Cette déformation locale est obtenue par fluage à froid de la matière constituant l'extrémité de l'armature interne sous l'action d'une bouterolle selon le procédé décrit dans le document US5301414. Ce procédé est dénommé 'bouterollage'.

Selon les variantes, divers degrés de bouterollage peuvent être envisagés. Un bouterollage tendant à augmenter le diamètre extérieur de l'armature intérieure au delà du diamètre extérieur de l'articulation (diamètre de l'emmanchement) permet la sécurisation de l'articulation. On peut limiter le bouterollage à l'obtention d'un diamètre extérieur supérieur au diamètre intérieur de l'armature extérieure sans dépasser le diamètre nominal de l'articulation (diamètre d'emmanchement). Ceci permet un montage de l'articulation sans contrainte particulière tout en empêchant la séparation des armatures en cas de rupture de la partie élastomérique.

En associant au bouterollage de l'armature intérieure, une forme particulière de l'armature extérieure formant une butée d'emmanchement et une réduction de son diamètre minimal, on obtient une sécurisation complète dans le sens de montage de l'articulation, tout en limitant l'ampleur nécessaire de la déformation par bouterollage.

On peut également réaliser tout ou partie de l'augmentation de diamètre après le montage de l'articulation sur l'élément rigide associé. Ceci permet d'augmenter le diamètre au delà du diamètre de l'emmanchement sans limiter les possibilités de montage de l'articulation.

Afin de réaliser une articulation sécurisée dans les deux sens de glissement suivant son axe, on peut procéder au bouterollage de la seconde extrémité de l'articulation comme précédemment décrit pour la première. Naturellement, on peut également combiner les principes de l'invention et le procédé de l'art antérieur (rondelle ou équivalent) sur une même articulation pour réaliser cette sécurisation dans les deux sens. La fonction de sécurisation peut être symétrique ou différente, de même que la configuration choisie pour la réaliser dépend de la géométrie de l'environnement de l'articulation, des options de montage possibles et de leurs coûts respectifs.

Les différents principes et modes de réalisation de l'invention seront mieux compris à l'aide des figures suivantes :
Fig 1 : sécurisation par rondelle (art antérieur)
Fig 2 : articulation sécurisée par bouterollage,
Fig 3 : articulation sécurisée par bouterollage associé à un profil particulier de l'armature extérieure,
Fig 4 : articulation partiellement sécurisée par bouterollage associé à un profil particulier de l'armature extérieure,
Fig 5 : articulation doublement sécurisée,
Fig 6 : articulation subissant le procédé de bouterollage.

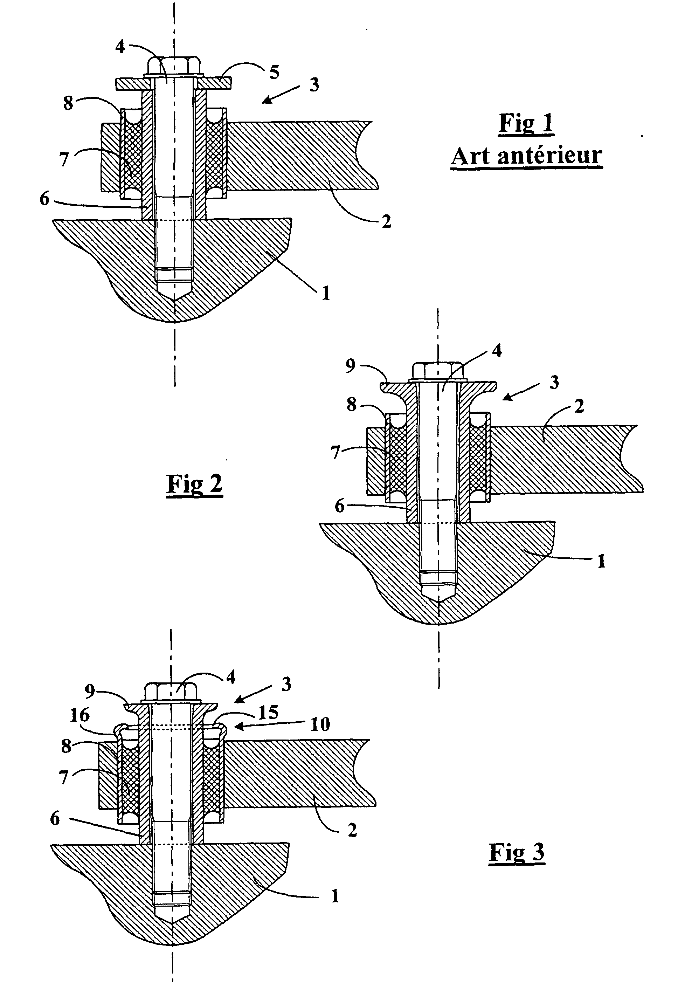

A la figure 1, on a représenté un exemple de montage connu de l'art antérieur. Des éléments rigides tels que l'essieu, le porte-roue ou la caisse (1) d'un véhicule et un bras (2) de sa suspension sont articulés par l'intermédiaire d'une articulation élastique (3). L'armature extérieure (8) de l'articulation (3) est emmanchée à force dans le bras (2). L'armature intérieure (6) de l'articulation (3) est maintenue solidaire à la caisse (1) par une vis (4). Afin de limiter la déformation de l'articulation ou d'empêcher la séparation complète du bras et de la caisse en cas de rupture de l'élément déformable (7) ou de démanchement de l'articulation, on interpose une rondelle (5) dont le diamètre est supérieur à celui de l'emmanchement dans le bras. Le profil de cette rondelle peut varier. On peut évidemment employer une seconde rondelle placée à l'autre extrémité axiale de l'articulation si la géométrie des éléments rigides est différente et que l'on veut éviter une déformation axiale excessive de l'articulation dans les deux sens suivant son axe.

La figure 2 ne représente pas une articulation selon l'invention. Une projection annulaire (9), formée sur une première extrémité de l'armature intérieure (6) par bouterollage présente un diamètre extérieur maximal supérieur au diamètre intérieur minimal de l'armature extérieure (8) et assure les mêmes fonctions que la rondelle (5) de la figure 1. Dans le cas ou l'opération de bouterollage a lieu avant : le montage de l'articulation dans le bras, on peut réaliser l'emmanchement en exerçant la pression d'emmanchement sur l'armature intérieure, ce qui peut simplifier l'outillage nécessaire, donc en abaisser le coût.
La figure 3 représente un premier mode de réalisation de l'invention. La différence par rapport à la figure 2 réside dans le fait que la projection annulaire (9) obtenue par bouterollage est moins importante et coopère avec une extrémité (10) de l'armature extérieure qui présente un épaulement (16) et une réduction (15) de son diamètre intérieur. Les avantages décrits pour le mode de réalisation de la figure 2 sont conservés et la taille relative de la projection (9) est réduite. Les dimensions et formes de l'épaulement (16) et de la réduction (15) relativement au profil de la projection annulaire (9) peuvent permettre de moduler la quantité d'énergie dissipée lors d'un choc exceptionnel comme on les simulent à l'occasion de " crash tests ".

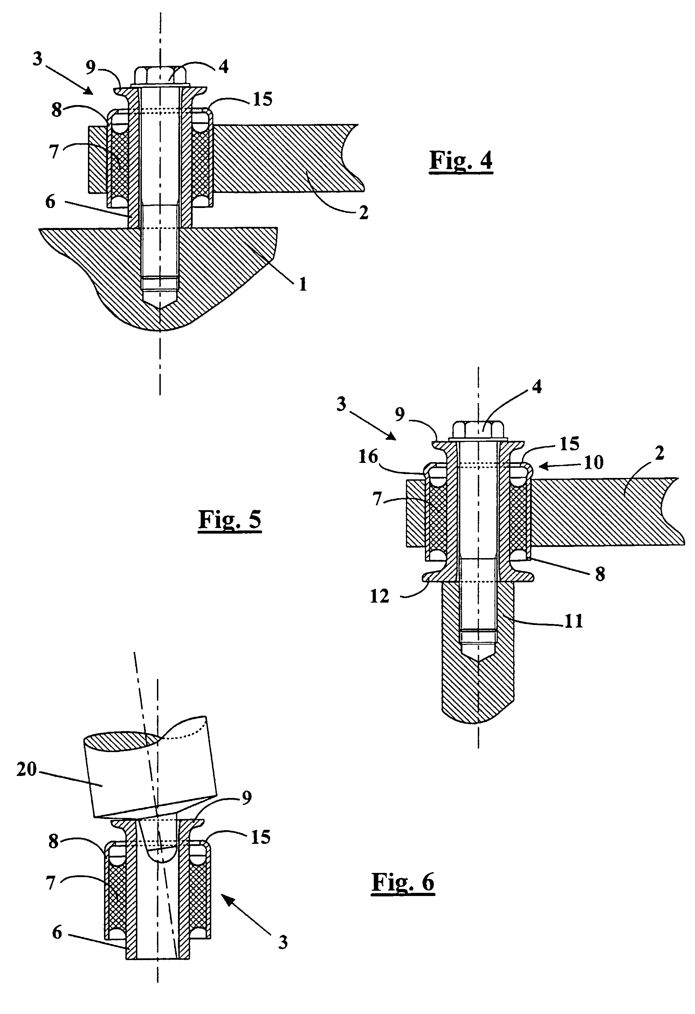

La figure 4 ne concerne pas un mode de réalisation de l'invention. L'intérêt par rapport aux modes précédemment décrits (figure 2 et 3) réside dans le fait que l'emmanchement de l'articulation (3) dans le bras (2) est possible dans les deux sens car le diamètre extérieur de la projection (9) est inférieur à celui de l'emmanchement. L'armature extérieure comporte une réduction (15) qui coopère avec la projection annulaire (9) dans le but d'empêcher la séparation des éléments rigides articulés (1,2). Cette fonction n'est assurée que dans la limite de la force de maintient de l'emmanchement.

La figure 5 représente un deuxième mode de réalisation de l'invention. Cette articulation combine, de part et d'autre de l'articulation (3), deux projections annulaires (9,12) selon l'une des réalisations précédemment décrites. La combinaison représentée est celle des figures 2 et 3 mais toutes sont possibles. Dans le cas (ici représenté) où l'emmanchement de l'articulation finie (3) serait impossible, on réalise au moins une partie de l'opération de bouterollage d'au moins une extrémité après montage sur le bras (2). Cette configuration permet d'empêcher la séparation des éléments rigides indépendamment de leur géométrie. On a représenté ici le cas de la liaison entre un bras (2) et une barre (11).

La figure 6 représente une articulation (3) au cours du procédé de bouterollage qui permet de créer une projection (9) à l'une des extrémités de l'armature intérieure par déformation (fluage) à froid de la matière. Comme il est décrit plus précisément dans le brevet US5301414, le bouterollage consiste à exercer par l'intermédiaire d'une bouterolle (20) tournant autour d'un axe oblique et roulant sur l'extrémité d'une tube une pression locale très importante qui repousse radialement la matière. Le fait que ce procédé se déroule à froid (faible augmentation de température tout à fait compatible avec l'élastomère) permet de ne former une projection annulaire qu'après le moulage de la partie élastomérique. Le moulage est ainsi réalisé dans une configuration favorable (armature interne tubulaire).

## Revendications

1. Articulation élastique (3) comprenant une armature rigide cylindrique se situant radialement à l'intérieure (6) de l'articulation et présentant au niveau d'une première extrémité un premier diamètre extérieur maximal et une armature rigide cylindrique radialement extérieure (8) présentant un premier diamètre intérieur minimal (15) d'une extrémité (10) adjacente à ladite première extrémité de l'armature intérieure, les dites armatures (6, 8) rigides sensiblement cylindriques et concentriques étant solidaires sans glissement par matériau élastomérique (7), ladite première extrémité dépassant axialement de ladite armature extérieure (8), ledit premier diamètre extérieur de ladite armature rigide intérieure (6) étant supérieur audit premier diamètre intérieur minimal (15) de ladite armature rigide extérieure (8), **caractérisée en ce que** ladite extrémité (10) de l'armature extérieure (8) présente un épaulement (16) et une réduction (15) formant butée pour ladite première extrémité, l'épaulement (16) ayant un diamètre plus grand que le diamètre extérieur de l'armature extérieure.

2. Articulation élastique (3) selon la revendication 1, **caractérisée en ce que** ledit premier diamètre extérieur maximal de ladite armature rigide radialement intérieure (6) correspond à une première projection annulaire (9) obtenue par bouterollage de ladite première extrémité après adhérisation desdites armatures rigides (6, 8) avec ledit matériau élastomérique (7).

3. Articulation élastique (3) selon l'une des revendications précédentes, **caractérisée en ce que** ledit premier diamètre extérieur maximal de ladite armature rigide radialement intérieure (6) est inférieur à un diamètre extérieur nominal de ladite armature rigide radialement extérieure (8).

4. Articulation élastique (3) selon l'une des revendications précédentes, ladite armature rigide radialement intérieure (6) présentant, au niveau d'une seconde extrémité axialement opposée à ladite première extrémité, un second diamètre extérieur maximal, ladite seconde extrémité dépassant axialement de ladite armature extérieure, **caractérisée en ce que** ledit second diamètre extérieur de ladite armature rigide radialement intérieure (6) est supérieur au diamètre extérieur nominal de ladite armature rigide radialement extérieure (8).

5. Articulation élastique (3) selon la revendication 4, **caractérisée en ce que** ledit second diamètre extérieur maximal au niveau de ladite seconde extrémité de ladite armature rigide radialement intérieure (6) correspond à une seconde projection annulaire (12) obtenue par bouterollage de ladite seconde extrémité après adhérisation desdites armatures rigides (6, 8) avec ledit matériau élastomérique.

6. Articulation élastique (3) selon l'une des revendications précédentes, ladite articulation (3) étant emmanchée dans un élément rigide (2) **caractérisée en ce que** l'une au moins desdites première et seconde projections annulaires (9, 12) est formée par bouterollage au moins en partie après emmanchement de ladite articulation (3) dans ledit élément rigide (2).

## Claims

1. An elastic articulation (3) comprising a rigid cylindrical frame situated radially inside (6) the articulation and having at a first end a first maximum outside diameter and a radially outer cylindrical rigid frame (8) having a first minimum inside diameter (15) at an end (10) adjacent the said first end of the inner frame, the said substantially cylindrical and concentric rigid frames (6, 8) being connected without sliding by elastomeric material (7), the said first end extending axially beyond the said outer frame (8), the said first outside diameter of the said inner rigid frame (6) being larger than the said first minimum inside diameter (15) of the said outer rigid frame (8), **characterised in that** the said end (10) of the outer frame (8) has a shoulder (16) and a reduction (15) forming an abutment for the said first end, the shoulder (16) having a larger diameter than the outside diameter of the outer frame.

2. An elastic articulation (3) according to claim 1, **characterised in that** the said first maximum outside diameter of the said radially inner rigid frame (6) corresponds to a first annular projection (9) obtained by rivet-type setting of the said first end after adhesion of the said rigid frames (6, 8) with the said elastomeric material (7).

3. An elastic articulation (3) according to one of the preceding claims, **characterised in that** the first maximum outside diameter of the said radially inner rigid frame (6) is less than a nominal outside diameter of the said radially outer rigid frame (8).

4. An elastic articulation (3) according to one of the preceding claims, the said radially inner rigid frame (6) having, at a second end axially remote from the said first end, a second maximum outside diameter, the said second end extending axially beyond the said outer frame, **characterised in that** the said second outside diameter of the said radially inner rigid frame (6) is larger than the nominal outside diameter of the said radially outer rigid frame (8).

5. An elastic articulation (3) according to claim 4, **characterised in that** the said second maximum outside diameter at the said second end of the said radially inner rigid frame (6) corresponds to a second annular projection (12) obtained by rivet-type setting of the second end after adhesion of the said rigid frames (6, 8) with the said elastomeric material.

6. An elastic articulation (3) according to one of the preceding claims, the said articulation (3) being fitted into a rigid element (2), **characterised in that** at least one of the said first and second annular projections (9, 12) is formed by rivet-type setting at least partly after fitting of the said articulation (3) in the said rigid element (2).

## Patentansprüche

1. Elastisches Gelenk (3) umfassend eine zylindrische, starre Armatur (6), die radial innen im Gelenk angeordnet ist, mit einem ersten maximalen äußeren Durchmesser an einem ersten Ende und eine außen liegende, zylindrische, starre Armatur (8), die einen ersten minimalen Innendurchmesser (15) eines Endes (10) benachbart dem ersten Ende der Innenarmatur aufweist, wobei die starren, im wesentlichen zylindrischen und konzentrischen Armaturen (6, 8) nicht verschieb- oder verrutschbar durch ein Elastomermaterial (7) fest verbunden sind, wobei das erste Ende die Außenarmatur (8) axial überragt, wobei der erste Außendurchmesser der starren Innenarmatur (6) größer ist als der erste minimale Innendurchmesser (15) der starren Außenarmatur (8) ist, dadruch gekennzeichnet, daß das Ende (10) der Außenarmatur (8) eine Schulter (16) und eine Reduktion (15) aufweist, die für das erste Ende einen Anschlag bildet, wobei die Schulter (16) einen größeren Durchmesser als der Außendurchmesser der Außenarmatur hat.

2. Elastisches Gelenk (3) nach Anspruch 1, **dadurch gekennzeichnet, daß** der erste maximale Außendurchmesser der radial innen liegenden, starren Armatur (6) einem ersten ringförmigen Vorsprung (9) entspricht, der durch Bouterollage des ersten Endes nach dem Befestigen der starren Armaturen (6, 8) aneinander mittels des Elastomermaterials hergestellt wird.

3. Elastisches Gelenk (3) nach einem der vorhergehenden Ansprüche, **dadurch gekennzeichnet, daß** der erste maximale Außendurchmesser der radial innen liegenden, starren Armatur (6) kleiner als ein äußerer Nenndurchmesser der radial außen liegenden, starren Armatur (8) ist.

4. Elastisches Gelenk (3) nach einem der vorhergehenden Ansprüche, wobei die radial innen liegende, starre Armatur (6) an einem zweiten Ende, das dem ersten Ende axial gegenüberliegt, einen zweiten, maximalen Außendurchmesser aufweist, wobei das zweite Ende die Außenarmatur axial überschreitet, **dadurch gekennzeichnet, daß** der zweite Außendurchmesser der radial innen liegenden, starren Armatur (6) größer als der äußere Nenndurchmesser der der radial außen liegenden, starren Armatur (8) ist.

5. Elastisches Gelenk (3) nach Anspruch 4, **dadurch gekennzeichnet, daß** der zweite, maximale Außendurchmesser am zweiten Ende der radial innen liegenden, starren Armatur (6) einem zweiten ringförmigen Vorsprung (12) entspricht, der durch Bouterollage des zweiten Endes nach dem Befestigen der starren Armaturen (6, 8) mittels des Elastomermaterials hergestellt wird.

6. Elastisches Gelenk (3) nach einem der vorhergehenden Ansprüche, wobei das Gelenk (3) in einem starren Bauteil (2) eingeschrumpft ist, **dadurch gekennzeichnet, daß** wenigstens einer der ersten und zweiten ringförmigen Vorsprünge (9, 12) zumindest teilweise durch Bouterollage nach der Ineingriffnahme des Gelenks (3) in dem starren Bauteil (2) hergestellt ist.
